# EUROPÄISCHE PATENTSCHRIFT

(11) **EP 2 829 860 B1**
(45) Veröffentlichungstag und Bekanntmachung des Hinweises auf die Patenterteilung: **06.04.2016**
(21) Anmeldenummer: 14178282.1
(22) Anmeldetag: 24.07.2014
(51) Int. Cl.: G01M 1/32, G01M 1/02

(54) **Vorrichtung zum Befestigen von Ausgleichsgewichten zum Unwuchtausgleich**
Device for the attachment of correction weights for unbalance correction
Dispositif de fixation de contrepoids pour l'équilibrage de balourd

(30) Priorität: 26.07.2013 DE 102013108048
(43) Veröffentlichungstag der Anmeldung: 28.01.2015
(73) Patentinhaber: Schenck RoTec GmbH, 64293 Darmstadt (DE)
(72) Erfinder: Rogalla, Martin, 64297 Darmstadt (DE)
(74) Vertreter: Haar, Lucas Heinz Jörn

(56) Entgegenhaltungen:
- DE-A1-102010 002 002
- DE-T2- 60 207 476
- DE-U1-202008 002 258
- US-A1- 2010 147 458
- US-A1- 2011 283 790

## Beschreibung

Die Erfindung betrifft eine Vorrichtung zum Befestigen von Ausgleichsgewichten zum Unwuchtausgleich an einem auszuwuchtenden drehbaren Körper, mit einer Bereitstellungseinheit, die nacheinander einzelne Ausgleichsgewichte bereitstellen kann, einer Befestigungsvorrichtung, die zur Anbringung der Ausgleichsgewichte an einem auszuwuchtenden drehbaren Körper bestimmt und ausgebildet ist und die eine erste Aufnahme für ein erstes Ausgleichsgewicht und eine zweite Aufnahme für ein zweites Ausgleichsgewicht aufweist.

Das Befestigen von Ausgleichsgewichten ist eine Methode zum Unwuchtausgleich, die vornehmlich zum Auswuchten von Fahrzeugrädern angewendet wird (siehe US 2011/0283790 A1, DE 20 2008 002 258 U1, US 2010/0147458 A1, DE 602 07 476 T2). Aus DE 10 2010 002 002 A1 ist eine vollautomatische Anlage für den Unwuchtausgleich von Fahrzeugrädern bekannt, bei der die Unwucht der Fahrzeugräder zunächst in einer Unwuchtmessstation gemessen wird und die Fahrzeugräder dann in eine Ausgleichsstation gefördert werden, in der die anhand der Messwerte von einer automatischen Ablängvorrichtung in passender Größe erzeugten Ausgleichsgewichte, die mit einer Klebstoffschicht versehen sind, mit Hilfe einer Befestigungsvorrichtung an den Fahrzeugrädern durch Kleben befestigt werden. Die Befestigungsvorrichtung weist hierbei einen Setzkopf mit zwei Aufnahmen für zwei Ausgleichsgewichte auf, damit diese nacheinander in zwei Ausgleichsebenen des für sie bestimmten Fahrzeugrades befestigt werden können. Zum Aufnehmen der Ausgleichsgewichte kann der Setzkopf an die Ablängvorrichtung so dicht herangefahren werden, dass die Ausgleichselemente nacheinander in die Aufnahmen des Setzkopfes eingesetzt werden können. Bei diesem Vorgang wird der Setzkopf um eine zentrale Achse gedreht, wobei auch längere Ausgleichsgewichte über ihre gesamte Länge gleichmäßig so in die Aufnahmen eingesetzt werden, dass sie mit ihrer Rückenfläche an dem Setzkopf anliegen.

Bei der bekannten Vorrichtung ist das Beladen des Setzkopfes mit zwei Ausgleichsgewichten zeitaufwändig, weil die Ausgleichsgewichte nacheinander abgelängt und in die Aufnahmen des Setzkopfes eingesetzt werden. Da der Setzkopf, während er beladen wird, keine Ausgleichsgewichte anbringen kann, wirkt sich die Beladungszeit unmittelbar auf die Taktzeit für das kontinuierliche Befestigen von Ausgleichsgewichten an einer Serie von Fahrzeugrädern aus.

Der Erfindung liegt die Aufgabe zugrunde, eine Vorrichtung zum Befestigen von Ausgleichsgewichten zum Unwuchtausgleich zu schaffen, die sich durch einen geringen Zeitaufwand für das Beladen der Befestigungsvorrichtung mit Ausgleichsgewichten auszeichnet.

Die Erfindung wird durch eine Vorrichtung mit den in Anspruch 1 angegebenen Merkmalen gelöst. Vorteilhafte Ausgestaltungen der Vorrichtung sind in den Unteransprüchen angegeben.

Nach der Erfindung umfasst die Vorrichtung zum Befestigen von Ausgleichsgewichten zum Unwuchtausgleich an einem auszuwuchtenden, drehbaren Körper eine Bereitstellungseinheit, die nacheinander einzelne Ausgleichsgewichte bereitstellen kann, und eine Befestigungsvorrichtung, die zur Anbringung der Ausgleichsgewichte an einem auszuwuchtenden drehbaren Körper bestimmt und ausgebildet ist und die eine erste Aufnahme für ein erstes Ausgleichsgewicht und eine zweite Aufnahme für ein zweites Ausgleichsgewicht aufweist, und weiterhin eine Fördereinheit, die dazu eingerichtet ist, bereitgestellte Ausgleichsgewichte in die Aufnahmen der Befestigungsvorrichtung zu fördern und die einen bewegbaren Förderkopf mit wenigstens zwei sich in Achsrichtung erstreckenden Förderelementen aufweist, die in einem Abstand voneinander an dem Förderkopf angeordnet sind und eine Gleitführung für die Ausgleichsgewichte bilden, und den Förderelementen zugeordneten Treibvorrichtungen, durch welche die Ausgleichsgewichte längs der Förderelemente bewegbar sind, wobei die Förderelemente jeweils ein an die Bereitstellungseinheit anschließbares Zuführende und ein an die Aufnahmen der Befestigungsvorrichtung anschließbares Abführende haben und durch Bewegen des Förderkopfes mit dem Zuführende an die Bereitstellungseinheit und mit dem Abführende an eine Aufnahme der Befestigungsvorrichtung anschließbar sind und wobei in wenigstens einer Stellung des Förderkopfes ein erstes Förderelement mit dem Abführende an die erste Aufnahme der Befestigungsvorrichtung und ein zweites Förderelement mit dem Abführende an die zweite Aufnahme der Befestigungsvorrichtung anschließbar ist. Das Anschließen der Förderelemente an die Bereitstellungseinheit und an die Aufnahmen der Befestigungsvorrichtung kann unmittelbar durch Anlage oder enge Annäherung der gegenseitigen Abschlussflächen erfolgen, alternativ kann das Anschließen aber auch mittelbar über zwischengeschaltete Führungselemente erfolgen, die feststehen und beispielsweise an der Fördereinheit angeordnet sein können.

Bei der Vorrichtung nach der Erfindung können mit Hilfe der Fördereinheit gleichzeitig zwei Ausgleichsgewichte in die beiden Aufnahmen der Befestigungsvorrichtung eingesetzt werden. Der Zeitaufwand für das Beladen der Befestigungsvorrichtung kann auf diese Weise halbiert und dadurch die für einen Auswuchtvorgang benötigte Taktzeit erheblich verkürzt werden. So werden die beiden Auswuchtgewichte nicht gleichzeitig, sondern nacheinander von der Bereitstellungseinheit bereitgestellt und dementsprechend auch nacheinander an die Fördereinheit übergeben. Die Übergabe der Auswuchtgewichte an die Fördereinheit kann jedoch in der Zeitperiode erfolgen, in der die Befestigungsvorrichtung zwei zuvor aufgenommene Ausgleichsgewichte an einem Fahrzeugrad befestigt. Die Taktzeit für den mit Hilfe der Befestigungsvorrichtung ausgeführten kompletten Befestigungsvorgang wird daher durch das Bereitstellen der Auswuchtgewichte und das Beladen der Fördereinheit nur dann beeinflusst, wenn dieser Vorgang länger dauern würde als der Befestigungsvorgang.

Nach einem weiteren Vorschlag der Erfindung kann der Förderkopf um eine Drehachse drehbar sein und die Förderelemente können durch Drehen des Förderkopfes entweder mit dem Zuführende an die Bereitstellungseinheit oder mit dem Abführende an eine Aufnahme der Befestigungsvorrichtung anschließbar sein, wobei in wenigstens einer Drehwinkelstellung des Förderkopfes ein erstes Förderelement mit dem Abführend an die erste Aufnahme der Befestigungsvorrichtung und ein zweites Förderelement mit dem Abführende an die zweite Aufnahme der Befestigungsvorrichtung anschließbar ist. Diese Gestaltung kann kostengünstig hergestellt werden und ermöglicht eine einfache Steuerung der Bewegungsabläufe.

Weiterhin kann nach der Erfindung der drehbare Förderkopf der Fördereinheit drei Förderelemente aufweisen, die bezogen auf die Drehachse des Förderkopfes einen Drehwinkelabstand von 120° voneinander haben, wobei der Förderkopf in drei Drehwinkelstellungen bewegbar ist, in denen jeweils ein Förderelement mit dem Zuführende an die Bereitstellungseinheit angeschlossen ist und die beiden anderen Förderelemente mit den Abführenden an die Aufnahmen der Befestigungsvorrichtung angeschlossen sind. Diese Weiterbildung hat den Vorteil, dass zeitgleich mit dem Einsetzen zweier Ausgleichsgewichte in die Aufnahmen der Befestigungsvorrichtung mittels zweier Förderelemente ein neues Ausgleichsgewicht für den nachfolgenden Befestigungsvorgang an das dritte Förderelement übergeben werden kann. Zur Vorbereitung des nächsten Ladevorgangs wird daher nur noch die Zeit für das Bereitstellen und Übergeben eines Ausgleichsgewichts an die Fördereinheit benötigt, so dass der hierfür benötigte Zeitaufwand verringert wird und das nächste Laden der Befestigungsvorrichtung noch schneller erfolgen und entsprechend die Taktzeit weiter verringert werden kann. Von Vorteil ist hierbei auch, dass der Förderkopf immer nur um Drehwinkelschritte von gleicher Größe, nämlich 120°, gedreht werden muss.

In einer weiteren vorteilhaften Ausgestaltung der Erfindung kann der drehbare Förderkopf vier Förderelemente aufweisen, die einen Drehwinkelabstand von 90° voneinander haben, wobei der Förderkopf in vier Drehwinkelstellungen bewegbar ist, in denen jeweils ein Förderelement mit dem Zuführende an die Bereitstellungseinheit anschließbar ist und zwei andere Förderelemente mit den Abführenden an die Aufnahmen der Befestigungsvorrichtung anschließbar sind. Diese Ausgestaltung der Fördereinheit bietet in Hinsicht auf eine kurze Taktzeit die gleichen Vorteile wie die Ausgestaltung mit drei Förderelementen. Zudem hat diese Ausgestaltung den Vorteil, dass die jeweils gleichzeitig an die Aufnahmen der Befestigungsvorrichtung anschließbaren Förderelemente in einer die Drehachse enthaltenden Ebene einander gegenüber liegend angeordnet sein können. Dies ist für die Gestaltung der Förderelemente und den Anschluss der Förderelemente an die Aufnahmen der Befestigungsvorrichtung besonders vorteilhaft.

Die Treibvorrichtung zum Bewegen der Ausgleichsgewichte entlang der Förderelemente kann nach der Erfindung einen in Längsrichtung eines Förderelements bewegbaren Schieber aufweisen, der mittels eines pneumatischen, hydraulischen oder elektrischen Aktors bewegbar ist. Je nach Gestaltung der Fördereinheit und ihrer Förderelemente können die Schieber der Treibvorrichtung gradlinig bewegbar oder um eine Drehachse drehbar ausgeführt sein. In einer bevorzugten Ausgestaltung der Erfindung ist die Gleitführung für die Ausgleichsgewichte jedes Förderelements um eine zur Drehachse des Förderkopfs windschiefe Krümmungsachse gekrümmt, wobei die Treibvorrichtung einen um eine Schwenkachse schwenkbaren Schieber aufweist, dessen Schwenkachse mit der Krümmungsachse der Gleitführung des Förderelements zusammenfällt, das mit seinem Abführende an eine der Aufnahmen der Befestigungsvorrichtung angeschlossenen ist.

Die gekrümmte Gestaltung der Förderelemente ist für den Anschluss der Förderelemente an die Aufnahmen der Befestigungsvorrichtung einerseits und an die Bereitstellungseinheit andererseits vorteilhaft. Sie ermöglicht weiterhin eine kostengünstig ausführbare Gestaltung der Treibvorrichtung, wobei diese keinen Bauraum auf der der Bereitstellungseinheit zugewandten Seite der Fördereinheit benötigt.

Wenn die Ausgleichsgewichte aus einem magnetischen Werkstoff bestehen oder magnetische Bestandteile enthalten, so können nach der Erfindung die Förderelemente mit magnetischen Haltemitteln versehen sein, durch die die Ausgleichsgewichte verschiebbar in der Gleitführung gehalten werden können. Zur Führung der Ausgleichsgewichte können hierbei die Förderelemente die Gleitführung seitlich begrenzende Führungsrippen aufweisen. Können die Ausgleichsgewichte nicht magnetisch gehalten werden, so werden die Förderelemente mit einem hinterschnittenen Führungsprofil versehen, in das die Ausgleichsgewichte formschlüssig eingreifen können.

Um die Ausgleichsgewichte störungsfrei aus der Gleitführung in die Aufnahme der Befestigungsvorrichtung bewegen zu können, müssen die an die Aufnahmen angeschlossenen Abführenden der Förderelemente passgenau zu den Aufnahmen ausgerichtet sein. Um dies zu erreichen, können nach der Erfindung an den Abführenden der Förderelemente Positioniermittel angebracht sein, die mit Gegenpositioniermitteln an den Aufnahmen der Befestigungsvorrichtung zusammenwirken.

Die Befestigungsvorrichtung kann nach der Erfindung einen um eine Achse drehbaren Befestigungskopf aufweisen, an dem die Aufnahmen für die Ausgleichgewichte angeordnet sind. Die Aufnahmen können an dem Befestigungskopf in zwei im Abstand voneinander angeordneten, zur Achse des Befestigungskopfs senkrechten Ebenen angeordnet sein, die den beiden Ebenen entsprechen, in denen der Unwuchtausgleich mit Hilfe der Ausgleichsgewichte erfolgen kann. Weiterhin kann der Befestigungskopf an dem Gelenkarm eines Roboters angebracht und durch gesteuerte Bewegung des Gelenkarms an den auszuwuchtenden Körper, beispielsweise ein Fahrzeugrad, heran bewegbar sein.

Die Erfindung wird nachfolgend anhand eines Ausführungsbeispiels näher erläutert, das in der Zeichnung dargestellt ist. Es zeigen
- Figur 1: eine perspektivische Darstellung eines Abschnitts einer Befestigungsvorrichtung nach der Erfindung,
- Figur 2: eine perspektivische Darstellung einer Bereitstellungseinheit und einer Fördereinheit nach der Erfindung,
- Figur 3: eine perspektivische Darstellung der Fördereinheit bei dem Beladen des Befestigungskopfes der Befestigungsvorrichtung mit Ausgleichsgewichten,
- Figur 4: eine perspektivische Darstellung der Fördereinheit beim Beladen des zweiten Teils eines zweigeteilten Ausgleichsgewichts.

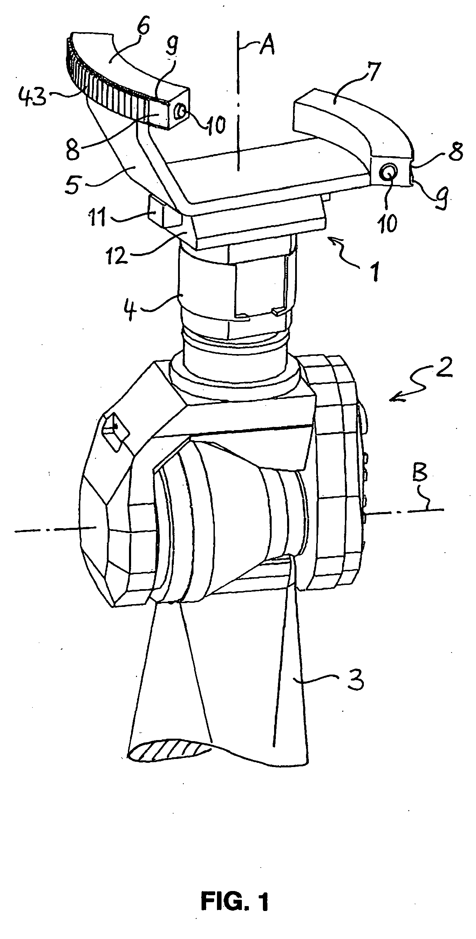

Figur 1 zeigt einen Befestigungskopf 1 einer Befestigungsvorrichtung 2 zum Befestigen von Ausgleichsgewichten an der Innenseite der Felge eines Fahrzeugrades. Der Befestigungskopf 1 ist um eine Drehachse A drehbar und um eine diese rechtwinklig kreuzende Achse B bewegbar mittels einer Schnellwechselkupplung 4 an dem Ende eines Gelenkarms 3 eines Handhabungsroboters angebracht und kann mit Hilfe des Gelenkarms 3 zur Aufnahme von Ausgleichsgewichten an eine Fördereinheit und zum Befestigen der Ausgleichsgewichte an ein auszuwuchtendes Fahrzeugrad bewegt werden. Der Befestigungskopf 1 hat einen sich quer zur Drehachse A erstreckenden Träger 5, an dessen entgegengesetzten Enden Aufnahmen 6, 7 für die Aufnahme von Auswuchtgewichten angeordnet sind. Die Aufnahmen 6, 7 bestehen jeweils aus einer gebogenen Schiene von rechteckigem Querschnitt mit einer konvexen Krümmungsfläche 8, die auf der der Drehachse A abgekehrten Außenseite der Schiene liegt. An den gekrümmten Rändern der Krümmungsfläche 8 sind in konstantem Abstand voneinander nach außen vorstehende Führungsrippen 9 angeordnet, die eine seitliche Führung für auf der Krümmungsfläche 8 angeordnete Ausgleichsgewichte bilden. An den stirnseitigen Endflächen sind die Aufnahmen 6, 7 mit kegelstumpfförmigen Vorsprüngen 10 versehen, die als Positioniermittel dienen.

Der Träger 5 ist an einem Schlitten 11 befestigt und durch diesen in einer Schlittenführung 12 quer zur Drehachse A an dem Befestigungskopf 1 bewegbar gelagert. Der Schlitten 11 wird durch die Kraft von Zentrierfedern in einer Mittelstellung gehalten. Durch Überwindung der Kraft der Zentrierfedern kann der Schlitten 11 mit dem Träger 5 in einer die Drehachse A enthaltenden und die Aufnahmen 6, 7 in der Mitte zwischen den Endflächen schneidenden Ebene in beiden Richtungen relativ zum Befestigungskopf 1 verschoben werden. Die Verschiebarkeit gegen Federkraft erleichtert die Erzeugung und Kontrolle einer Mindestanpresskraft beim Befestigen der Ausgleichsgewichte am auszuwuchtenden Körper. Die Steuerung des Befestigungskopfes 1 muss dann nicht kraftregelnd sondern kann positionsbezogen sein, was vorteilhaft ist. Weiterhin kann durch Näherungsschalter überprüft werden, ob der Schlitten beim Befestigen eines Ausgleichsgewichts weit genug verschoben wird, um die Feder entsprechend der geforderten Anpresskraft zu spannen.

Der Träger 5 hat die Form einer rechteckigen Platte, die an einer Schmalseite einen etwa in einem Winkel von 45° abgebogenen Arm aufweist, an dem eine Aufnahme 6 angebracht ist. Die andere Aufnahme 7 ist an der dem Arm gegenüber liegenden Schmalseite des Trägers 5 befestigt. Auf diese Weise liegen die beiden Aufnahmen 6, 7 in zwei verschiedenen, zur Drehachse A senkrechten Ebenen, die einen Abstand voneinander haben. Hierdurch wird sichergestellt, dass die beiden Aufnahmen 6, 7 sich bei der Befestigung der Ausgleichsgewichte nicht gegenseitig behindern. Der Abstand der Aufnahmen 6, 7 von der Drehachse A ist kleiner als der halbe Innendurchmesser der Felge, für die der Befestigungskopf 1 bestimmt ist.

Die Aufnahmen 6, 7 sind zum Halten von Ausgleichsgewichten ausgebildet, die aus einem magnetisierbaren Material bestehen. Sie sind daher magnetisch. Die magnetische Wirkung kann durch eine Mehrzahl von Permanentmagneten bewirkt werden, die versenkt in Bohrungen in den Krümmungsflächen 8 der Aufnahmen 6, 7 eingesetzt sind. Durch die magnetische Wirkung werden die Ausgleichsgewichte gegen die Krümmungsflächen 8 der Aufnahmen 6, 7 gedrückt und bis zu ihrer Befestigung an der Felge transportsicher gehalten. Das Befestigen der Ausgleichsgewichte erfolgt durch Kleben. Hierzu sind die Ausgleichsgewichte auf der von der Krümmungsfläche 8 abgekehrten Seite mit einer Klebstoffschicht versehen. Sollen andere Formen von Ausgleichsgewichten befestigt werden, so kann der Befestigungskopf 1 an der durch die Schnellwechselkupplung 4 gebildeten Schnittstelle von dem Gelenkarm 3 getrennt und durch einen dafür bestimmten anderen Befestigungskopf ersetzt werden.

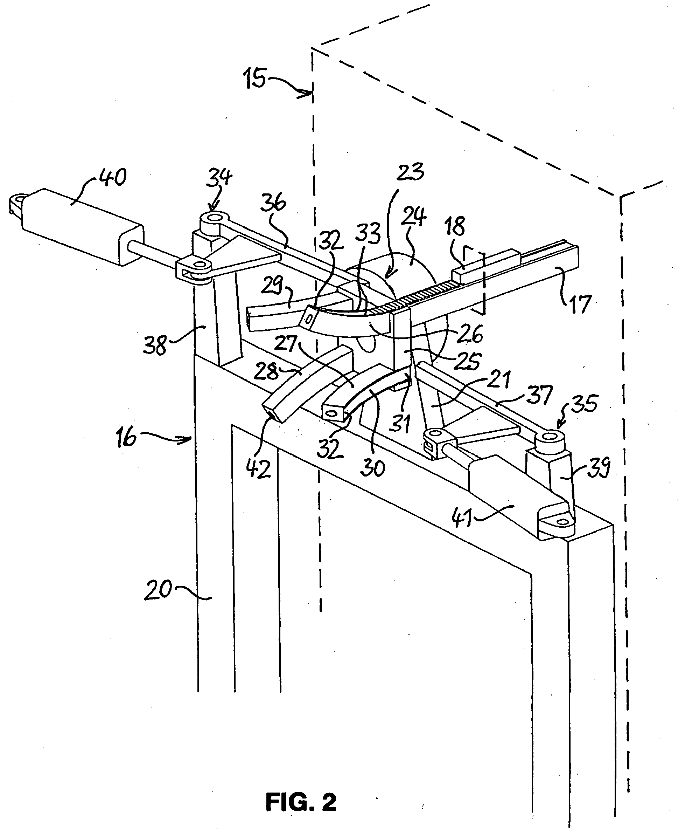

Figur 2 zeigt eine Bereitstellungseinheit 15 und eine an dieser angeordnete Fördereinheit 16. Die Bereitstellungseinheit 15 ist dazu eingerichtet, Auswuchtgewichte in der zum Auswuchten jeweils benötigten Größe durch Abtrennen von einem bevorrateten Strang herzustellen und über eine Zuführschiene 17 der Fördereinheit 16 zuzuführen. Die Bereitstellungseinheit 15 wird von einer Steuervorrichtung gesteuert, die in Abhängigkeit von den Messsignalen einer Unwuchtmessstation die Abtrennlänge der einzelnen Auswuchtgewichte so steuert, dass ihr Gewicht jeweils die zum Auswuchten erforderliche Größe hat. Die abgetrennten Auswuchtgewichte werden dann nacheinander auf einer Zuführschiene 17 bereitgestellt und mit Hilfe eines Ausschiebers 18 an die Fördereinheit 16 übergeben.

Die Fördereinheit 16 weist ein neben der Bereitstellungseinheit 15 angeordnetes Gestell 20 mit einer Lagerstütze 21 auf, an der ein Förderkopf 23 drehbar gelagert ist. An der Lagerstütze 21 ist weiterhin ein Motor 24 befestigt, durch den der Förderkopf 23 gedreht werden kann. Der Förderkopf 23 weist eine quadratische Scheibe 25 auf, an der in gleichem Abstand von der im Zentrum der Scheibe 25 liegenden Drehachse des Förderkopfs 23 und in regelmäßigem Abstand voneinander vier stabförmige Förderelemente 26, 27, 28, 29 mit einem Ende befestigt sind. Die Förderelemente 26 bis 29 gleichen einander und sind rotationssymmetrisch angeordnet, so dass bei einer Drehung des Förderkopfes 23 um einen Drehwinkel von 90° jedes Förderelement den Platz des ihm in Drehrichtung vorausgehenden Förderelements einnimmt. Jedes Förderelement 26 bis 29 hat die Form einer gebogenen Schiene, die mit ihrer konkaven Seite eine Gleitführung 30 für Ausgleichsgewichte bildet. Die Förderelemente 26 bis 29 sind an dem Rand der Scheibe 25 so befestigt, dass die Gleitführung 30 sich durch die Scheibe 25 hindurch erstreckt und die Förderelemente 26 bis 29 auf der der Bereitstellungseinheit 15 zugekehrten Seite der Scheibe 25 ein Zuführende 31 zum Zuführen von Ausgleichsgewichten bilden. Auf der der Bereitstellungseinheit 15 abgekehrten Seite der Scheibe 25 erstrecken sich die Förderelemente 26 bis 29 in Richtung der Drehachse, wobei ihr Abstand von der Drehachse in Folge ihrer Krümmung mit zunehmender Entfernung von der Scheibe 25 zunimmt. Die in einem Abstand von der Scheibe 25 liegenden, freien Enden der Förderelemente 26 bis 29 bilden Abführenden 32, die zum Anschließen der Förderelemente 26 bis 29 an die Aufnahmen 6, 7 des Befestigungskopfes 1 bestimmt sind.

Um die Ausgleichsgewichte in den Gleitführungen 30 der Förderelemente 26 bis 29 verschiebbar zu halten, sind die Förderelemente 26 bis 29 in analoger Weise wie die Aufnahmen 6, 7 des Befestigungskopfs 1 mit Permanentmagneten versehen. Weiterhin haben die Förderelemente 26 bis 29 die Gleitführungen 30 seitlich begrenzende Führungsrippen 33, durch die die Ausgleichsgewichte in Längsrichtung der Gleitführungen 30 geführt werden.

Für das Fördern von Ausgleichsgewichten, die nicht magnetisch gehalten werden können, können die Förderelemente 26 bis 29 mit die Ausgleichsgewichte formschlüssig führenden Führungsmitteln versehen sein, beispielsweise mit seitlichen Führungsrippen, die den Seitenrand der Ausgleichsgewichte übergreifen.

An dem Gestell 20 sind weiterhin zwei Treibvorrichtungen 34, 35 angebracht, die zum Bewegen von Ausgleichsgewichten entlang der Förderelemente 26 bis 29 dienen. Die Treibvorrichtungen 34, 35 haben jeweils einen um eine Schwenkachse schwenkbaren Schieber 36, 37, der an einem Lagerbock 38, 39 gelagert ist. Die Schieber 36, 37 sind jeweils durch einen als doppelt wirkender Pneumatikzylinder ausgebildeten Aktor 40, 41 schwenkbar, der an dem Gestell 20 abgestützt ist. Die Schwenkachsen der Schieber 36, 37 sind parallel und fallen mit den Krümmungsachsen der beiden Gleitführungen 30 derjenigen Förderelemente zusammen, die sich in der an den Befestigungskopf 1 anschließbaren Übergabestellung befinden. In der in Figur 2 gezeigten Übergabestellung des Förderkopfes 23 sind dies die Förderelemente 27 und 29.

Die Fördereinheit 16 ist so an der Bereitstellungseinheit 15 angeordnet, dass die Zuführschiene 17 an der Ebene endet, in der sich die Zuführenden 31 der Förderelemente 26 bis 29 befinden. Die Zuführschiene 17 und der Förderkopf 23 sind weiterhin so zueinander ausgerichtet, dass sich in der Übergabestellung des Förderkopfes 23 ein in dieser Stellung nicht an den Befestigungskopf 1 anschließbares Förderelement, in Figur 2 das Förderelement 26, dem Ende der Zuführschiene 17 so gegenüberliegt, dass ein bereitgestelltes Ausgleichsgewicht durch den Ausschieber 18 der Bereitstellungseinheit 15 in die Gleitführung 30 des Förderelements 26 eingeschoben werden kann. Auf diese Weise kann das Zuführen eines neuen Ausgleichsgewichts zur Fördereinheit 16 zeitgleich mit der Übergabe von Ausgleichsgewichten an den Befestigungskopf 1 der Befestigungsvorrichtung 2 erfolgen.

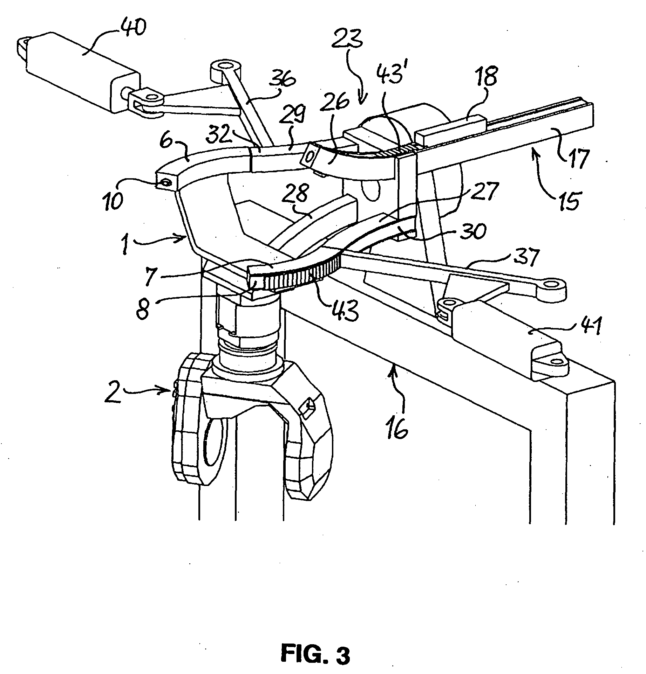

Figur 3 zeigt die Fördereinheit 16 in der Übergabestellung für die Übergabe von zwei Ausgleichsgewichten an den Befestigungskopf 1 zu einem Zeitpunkt, zu dem der Übergabevorgang noch nicht ganz beendet ist. Der Befestigungskopf 1 ist mit den Aufnahmen 6, 7 in Anlage an den Abführenden 32 der Förderelemente 27, 29 derart, dass die Krümmungsflächen 8 der Aufnahmen 6, 7 unmittelbar und stufenlos an die Gleitführungen 30 der Förderelemente 27, 29 anschließen. Zur genauen Ausrichtung der Aufnahmen 6, 7 des Befestigungskopfes 1 gegenüber den Förderelementen 27, 29 dienen die an den Enden der Aufnahmen 6, 7 angeordneten Vorsprünge 10, die in dazu passende Bohrungen 42 in den Stirnseiten der freien Enden der Förderelemente 26 bis 29 eingreifen. Bei der Übergabe werden die in den Gleitführungen 30 aufgenommenen Ausgleichsgewichte 43 - nur eines ist in der Zeichnung sichtbar - durch Betätigung der Aktoren 40, 41 von den Schiebern 36, 37 aus den Gleitführungen 30 in die Aufnahmen 6, 7 geschoben. Der Arbeitsweg der Schieber 36, 37 ist hierbei mit Hilfe von Anschlägen an den Aktoren 40, 41 so eingestellt, dass am Ende der Übergabe die an den Schiebern 36, 37 anliegenden Enden der Ausgleichsgewichte 43 mit den Enden der Aufnahmen 6, 7 bündig sind. Die Position der übergebenen Ausgleichsgewichte 43 ist damit in Bezug auf den Befestigungskopf 1 eindeutig definiert und kann der Berechnung der Befestigungsposition des Befestigungskopfes in Bezug auf das auszuwuchtende Fahrzeugrad zugrunde gelegt werden. Während der Übergabe der Ausgleichsgewichte 43 an den Befestigungskopf 1 kann außerdem von der Bereitstellungseinheit 15 ein neues Ausgleichsgewicht 43' in die Gleitführung des Förderelements 26 eingeschoben werden.

Der Übergabevorgang wird beendet, wenn die Ausgleichsgewichte 43 vollständig in die Aufnahmen 6, 7 eingeschoben sind und das Zuführen des neuen Ausgleichsgewichts 43' beendet ist. Durch Ansteuern der Aktoren 40, 41 werden die Schieber 36, 37 dann in die in Figur 2 gezeigte Ausgangsstellung zurückbewegt. Anschließend wird der Förderkopf 23 um seine Achse um 180° gedreht, damit die Bereitstellungseinheit ein zweites Gewicht in das Förderelement 28 einschieben kann. Ist dies geschehen, so wird der Förderkopf 23 nochmals um einen Drehwinkel von 90° gedreht, wodurch die neue Ausgleichsgewichte enthaltenden Förderelemente 26, 28 in die zur Übergabe an den Befestigungskopf bereite Stellung gebracht werden. Nach Beendigung der währenddessen stattfindenden Befestigung der Ausgleichsgewichte mit Hilfe des Befestigungskopfes 1 kann dieser wieder an die Fördereinrichtung 16 heran bewegt und zur Übernahme der neuen Ausgleichsgewichte 43' an die Förderelemente 26, 28 des Förderkopfes 23 gekuppelt werden.

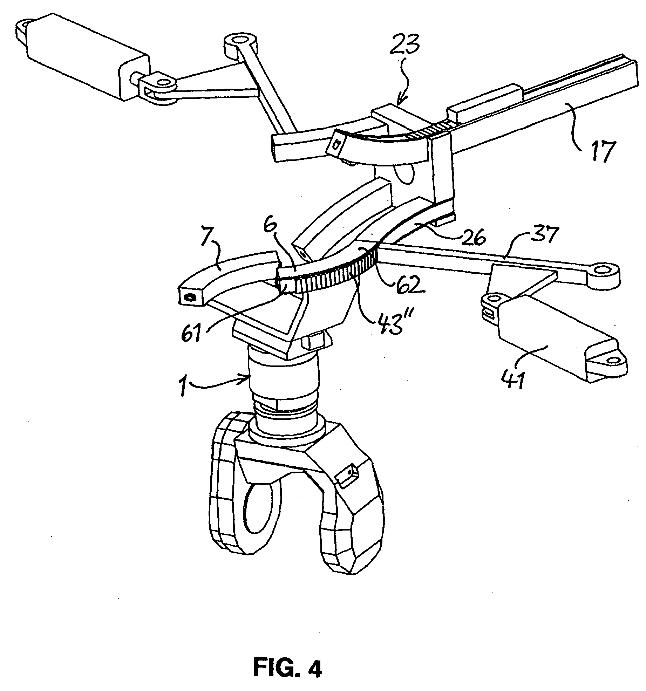

Figur 4 zeigt eine Übergabesituation bei einem Anwendungsfall, bei dem, bedingt durch die Gestaltung der für die Anbringung eines Auswuchtgewichts vorgesehenen Stelle im Fahrzeugrad, das Auswuchtgewicht aus zwei Teilen bestehen muss, die in einem definierten Abstand voneinander in der gleichen Auswuchtebene am Fahrzeugrad anzubringen sind. Da es sich hierbei in der Regel um die tiefer in der Felgenschüssel liegende Auswuchtebene handelt, kommt für die Anbringung der beiden Gewichtteile nur die gleiche Aufnahme 6 des Befestigungskopfes 1 in Betracht. Damit die beiden Gewichtteile im richtigen Abstand voneinander befestigt werden können, wird in einem ersten Schritt zunächst die Aufnahme 6 wie in Figur 3 gezeigt durch die Fördereinheit 16 von der einen Seite mit dem ersten Gewichtteil geladen. Die Befestigungsposition des ersten Gewichtteils wird daher durch das an dem Förderelement anliegende erste Ende 61 der Aufnahme 6 bestimmt.

Nachdem der erste Gewichtteil befestigt ist, wird zur Übernahme des zweiten Gewichtteils der Befestigungskopf 1 in einer um 180° gedrehten und entsprechend höhenversetzten Lage mit dem zweiten Ende 62 der Aufnahme 6 an das Förderelement 26 angelegt und das zweite Gewichtteil 43" mittels des Schiebers 37 aus dem Förderelement 26 in die Aufnahme 6 soweit eingeschoben, dass sein hinteres Ende mit dem Ende 62 bündig ist. Da nun das zweite Ende 62 der Aufnahme 6 die Position des zweiten Gewichtteils gegenüber dem Befestigungskopf 1 bestimmt, kann auf diese Weise das zweite Gewichtteil 43" ungeachtet seiner Länge in einem genau festlegbaren Abstand von dem ersten Gewichtsteil am Fahrzeugrad befestigt werden.

## Patentansprüche

1. Vorrichtung zum Befestigen von Ausgleichsgewichten zum Unwuchtausgleich an einem auszuwuchtenden drehbaren Körper, mit einer Bereitstellungseinheit (15), die nacheinander einzelne Ausgleichsgewichte bereitstellen kann,
einer Befestigungsvorrichtung (2), die zur Anbringung der Ausgleichsgewichte an einem auszuwuchtenden drehbaren Körper bestimmt und ausgebildet ist und die eine erste Aufnahme (6) für ein erstes Ausgleichsgewicht und eine zweite Aufnahme (7) für ein zweites Ausgleichsgewicht aufweist,
einer Fördereinheit (16), die dazu eingerichtet ist, bereitgestellte Ausgleichsgewichte in die Aufnahmen der Befestigungsvorrichtung (2) zu fördern, **dadurch gekennzeichnet, dass** die Fördereinheit (16) einen bewegbaren Förderkopf (23) mit wenigstens zwei sich von dem Förderkopf in einer Richtung erstreckenden Förderelementen (26, 27, 28, 29) aufweist, die in einem Abstand voneinander an dem Förderkopf (23) angeordnet sind und jeweils eine Gleitführung (30) für die Ausgleichsgewichte bilden, und
den Förderelementen (26, 27, 28, 29) zugeordneten Treibvorrichtungen (34, 35), durch welche die Ausgleichsgewichte längs der Förderelemente (26, 27, 28, 29) bewegbar sind,
wobei die Förderelemente (26, 27, 28, 29) jeweils ein an die Bereitstellungseinheit (15) anschließbares Zuführende (31) und ein an die Aufnahmen (6, 7) der Befestigungsvorrichtung (2) anschließbares Abführende (32) haben und durch Bewegen des Förderkopfes (23) entweder mit dem Zuführende (31) an die Bereitstellungseinheit (15) oder mit dem Abführende (32) an eine der Aufnahmen (6, 7) der Befestigungsvorrichtung (2) anschließbar sind und wobei in wenigstens einer Stellung des Förderkopfes (23) ein erstes der Förderelemente (26, 27, 28, 29) mit dem Abführende (32) an die erste Aufnahme (6) der Befestigungsvorrichtung (2) und ein zweites der Förderelemente (26, 27, 28, 29) mit dem Abführende (32) an die zweite Aufnahme (7) der Befestigungsvorrichtung (2) anschließbar ist.

2. Vorrichtung nach Anspruch 1, **dadurch gekennzeichnet, dass** der Förderkopf (23) um eine Drehachse drehbar ist und die Förderelemente (26, 27, 28, 29) durch Drehen des Förderkopfes (23) entweder mit dem Zuführende (31) an die Bereitstellungseinheit (15) oder mit dem Abführende (32) an eine Aufnahme der Befestigungsvorrichtung (2) anschließbar sind und wobei in wenigstens einer Drehwinkelstellung des Förderkopfes (23) ein erstes der Förderelemente (26, 27, 28, 29) mit dem Abführende (32) an die erste Aufnahme (6) und ein zweites der Förderelemente (26, 27, 28, 29) mit dem Abführende (32) an die zweite Aufnahme (7) anschließbar ist.

3. Vorrichtung nach Anspruch 2, **dadurch gekennzeichnet, dass** der drehbare Förderkopf (23) drei Förderelemente (26, 27, 28) aufweist, die einen Drehwinkelabstand von 120° voneinander haben, wobei der Förderkopf (23) in drei Drehwinkelstellungen bewegbar ist, in denen jeweils eines der Förderelemente (26, 27, 28) mit dem Zuführende (31) an die Bereitstellungseinheit (15) angeschlossen ist und die beiden anderen Förderelemente (26, 27, 28) mit den Abführenden (32) an die Aufnahmen (6, 7) der Befestigungsvorrichtung (2) angeschlossen sind.

4. Vorrichtung nach Anspruch 2, **dadurch gekennzeichnet, dass** der Förderkopf vier Förderelemente (26, 27, 28, 29) aufweist, die einen Drehwinkelabstand von 90° voneinander haben, wobei der Förderkopf (23) in vier Drehwinkelstellungen bewegbar ist, in denen jeweils eines der Förderelemente (26, 27, 28, 29) mit dem Zuführende (31) an die Bereitstellungseinheit angeschlossen ist und zwei andere der Förderelemente (26, 27, 28, 29) mit den Abführenden (32) an die Aufnahmen (6, 7) der Befestigungsvorrichtung (2) angeschlossen sind.

5. Vorrichtung nach einem der vorhergehenden Ansprüche, **dadurch gekennzeichnet, dass** die Treibvorrichtung (34, 35) einen längs eines der Förderelemente (26, 27, 28, 29) bewegbaren Schieber (36, 37) aufweist, der mittels eines pneumatischen, hydraulischen oder elektrischen Aktors (40, 41) bewegbar ist.

6. Vorrichtung nach Anspruch 5, **dadurch gekennzeichnet, dass** die Gleitführung (30) für die Ausgleichsgewichte jedes Förderelements (26, 27, 28, 29) um eine zur Drehachse des Förderkopfs (23) windschiefe Krümmungsachse gekrümmt ist und dass der Schieber (36, 37) der Treibvorrichtung (34, 35) um eine Schwenkachse schwenkbar ist und seine Schwenkachse mit der Krümmungsachse der Gleitführung (30) jeweils eines der Förderelemente (26, 27, 28, 29) zusammenfällt, die mit dem Abführende (32) an eine der Aufnahmen (6, 7) der Befestigungsvorrichtung (2) angeschlossen sind.

7. Vorrichtung nach einem der vorhergehenden Ansprüche, **dadurch gekennzeichnet, dass** die Förderelemente (26, 27, 28, 29) magnetische Haltemittel aufweisen, durch welche die Ausgleichsgewichte verschiebbar in der Gleitführung (30) gehalten sind.

8. Vorrichtung nach einem der vorhergehenden Ansprüche, **dadurch gekennzeichnet, dass** die Gleitführungen der Förderelemente (26, 27, 28, 29) an eine Saugluftquelle angeschlossene Öffnungen aufweisen, durch welche an den Gleitführungen ein Unterdruck zum verschiebbaren Halten der Ausgleichsgewichte erzeugbar ist.

9. Vorrichtung nach einem der vorhergehenden Ansprüche, **dadurch gekennzeichnet, dass** die Förderelemente (26, 27, 28, 29) die Gleitführung (30) seitlich begrenzende Führungsrippen (33) aufweisen.

10. Vorrichtung nach einem der vorhergehenden Ansprüche, **dadurch gekennzeichnet, dass** an den Abführenden (32) der Förderelemente (26, 27, 28, 29) mit den Aufnahmen (6, 7) der Befestigungsvorrichtung (2) zusammenwirkende Positioniermittel angebracht sind.

11. Vorrichtung nach einem der vorhergehenden Ansprüche, **dadurch gekennzeichnet, dass** die Befestigungsvorrichtung (2) einen um eine Achse drehbaren Befestigungskopf (1) aufweist, an dem die Aufnahmen (6, 7) für die Ausgleichgewichte angeordnet sind.

12. Vorrichtung nach Anspruch 11, **dadurch gekennzeichnet, dass** die Aufnahmen (6, 7) an dem Befestigungskopf (1) in verschiedenen, im Abstand voneinander angeordneten, zur Achse senkrechten Ebenen angeordnet sind.

13. Vorrichtung nach einem der Ansprüche 11 oder 12, **dadurch gekennzeichnet, dass** der Befestigungskopf (1) an dem Gelenkarm (3) eines Roboters angebracht ist und durch gesteuerte Bewegung des Gelenkarms (3) an den auszuwuchtenden Körper heran bewegbar ist.

14. Vorrichtung nach Anspruch 13, **dadurch gekennzeichnet, dass** der Befestigungskopf (1) mittels einer Schnellwechselkupplung (4) an dem Gelenkarm (3) des Roboters angebracht ist.

15. Vorrichtung nach einem der Ansprüche 11 bis 14, **dadurch gekennzeichnet, dass** der Befestigungskopf (1) in einer Schlittenführung (12) gelagert und in der Schlittenführung (12) entgegen der Kraft von Zentrierfedern aus einer Mittelstellung quer zur Drehachse bewegbar ist.

## Claims

1. A device for the attachment of correction weights for unbalance correction to a rotary body to be balanced,
comprising
a supply unit (15) capable of supplying individual correction weights in successive sequence,
an attachment device (2) intended and configured for applying the correction weights to a rotary body to be balanced and including a first receptacle (6) for a first correction weight and a second receptacle (7) for a second correction weight,
a feed unit (16) which is constructed to feed supplied correction weights to the receptacles of the attachment device (2), **characterized in that** the feed unit (16) includes a movable feeder head (23) which has at least two axially extending feeder elements (26, 27, 28, 29) arranged on the feeder head (23) at a relative distance and forming a slideway (30) for the correction weights,
and
driving devices (34, 35) associated with the feeder elements (26, 27, 28, 29) to cause the correction weights to be movable longitudinally to the feeder elements (26, 27, 28, 29), wherein each of said feeder elements (26, 27, 28, 29) has a supply end (31) connectable to the supply unit (15) and a discharge end (32) connectable to the receptacles (6, 7) of the attachment device (2), and movement of the feeder head (23) enables either the supply end (31) to be connected to the supply unit (15) or the discharge end (32) to be connected to one of the receptacles (6, 7) of the attachment device (2), and wherein in at least one position of the feeder head (23) a first feeder element (26, 27, 28, 29) is connectable with its discharge end (32) to the first receptacle (6) of the attachment device (2) and a second feeder element (26, 27, 28, 29) is connectable with its discharge end (32) to the second receptacle (7) of the attachment device (2).

2. The device according to claim 1, **characterized in that** the feeder head (23) is rotatable about an axis of rotation, and by rotating the feeder head (23) the feeder elements (26, 27, 28, 29) are connectable either to the supply unit (15) with their supply end (31) or to a receptacle of the attachment device (2) with their discharge end (32), and wherein in at least one rotational angle position of the feeder head (23) a first feeder element (26, 27, 28, 29) is connectable to the first receptacle (6) with its discharge end (32), and a second feeder element (26, 27, 28, 29) is connectable to the second receptacle (7) with its discharge end (32).

3. The device according to claim 2, **characterized in that** the rotary feeder head (23) includes three feeder elements (26, 27, 28) spaced from each other at an angular distance of 120°, with the feeder head (23) being movable into three rotational angle positions in which a respective one of the feeder elements (26, 27, 28) has its supply end (31) connected to the supply unit (15) while the discharge ends (32) of the two other feeder elements (26, 27, 28) are connectable to the receptacles (6, 7) of the attachment device (2).

4. The device according to claim 2, **characterized in that** the feeder head includes four feeder elements (26, 27, 28, 29) spaced from each other at an angular distance of 90°, with the feeder head (23) being movable into four rotational angle positions in which a respective one of the feeder elements (26, 27, 28, 29) has its supply end (31) connected to the supply unit (15) and two other feeder elements (26, 27, 28, 29) are connectable to the receptacles (6, 7) of the attachment device (2) with their discharge ends (32).

5. The device according to any one of the preceding claims, **characterized in that** the driving device (34, 35) includes a pusher (36, 37) movable in the longitudinal direction of a feeder element (26, 27, 28, 29) by means of a pneumatic, hydraulic or electrical actuator (40, 41).

6. The device according to claim 5, **characterized in that** the slideway (30) for the correction weights of each feeder element (26, 27, 28, 29) is curved about a curvature axis askew relative to the axis of rotation of the feeder head (23), and that the driving device (34, 35) includes a pusher (36, 37) pivotal about a pivot axis, its pivot axis coinciding with the curvature axis of the slideway (30) of that particular feeder element (26, 27, 28, 29) that is connectable with its discharge end (32) to one of the receptacles (6, 7) of the attachment device (2).

7. The device according to any one of the preceding claims, **characterized in that** the feeder elements (26, 27, 28, 29) include magnetic retaining means for slidably holding the correction weights in the slideway (30).

8. The device according to any one of the preceding claims, **characterized in that** the slideways of the feeder elements (26, 27, 28, 29) include apertures connected to a source of vacuum for enabling a vacuum to be generated on the slideways for slidably holding the correction weights.

9. The device according to any one of the preceding claims, **characterized in that** the feeder elements (26, 27, 28, 29) include guide ribs (33) laterally bounding the slideway (30).

10. The device according to any one of the preceding claims, **characterized in that** locating means are provided on the discharge ends (32) of the feeder elements (26, 27, 28, 29), which cooperate with the receptacles (6, 7) of the attachment device (2).

11. The device according to any one of the preceding claims, **characterized in that** the attachment device (2) includes an applicator head (1) rotary about an axis and mounting the receptacles (6, 7) for the correction weights.

12. The device according to claim 11, **characterized in that** the receptacles (6, 7) are arranged on the applicator head (1) in different planes spaced from each other normal to the axis.

13. The device according to any one of the claims 11 or 12, **characterized in that** the applicator head (1) is mounted on the jointed arm (3) of a robot and is movable up to the body to be balanced by controlled movement of the jointed arm (3).

14. The device according to claim 13, **characterized in that** the applicator head (1) is mounted on the jointed arm (3) of the robot by means of a quick-release coupling (4).

15. The device according to any one of the claims 11 to 14, **characterized in that** the applicator head (1) is carried in a slide guideway (12) and is movable in the slide guideway (12) from a mid-position in a direction transverse to the axis of rotation in opposition to the force of centering springs.

## Revendications

1. Dispositif de fixation de poids d'équilibrage pour la correction de balourd sur un corps rotatif à équilibrer, avec
une unité de préparation (15) qui peut préparer les uns après les autres différents poids d'équilibrage,
un dispositif de fixation (2) qui est destiné et conçu pour appliquer les poids d'équilibrage sur un corps rotatif à équilibrer et qui présente un premier logement (6) pour un premier poids d'équilibrage et un deuxième logement (7) pour un deuxième poids d'équilibrage,
une unité de convoyage (16) qui est arrangée pour convoyer les poids d'équilibrage préparés dans les logements du dispositif de fixation (2), **caractérisé en ce que** l'unité de convoyage (16) est munie d'une tête de convoyage (23) mobile avec au moins deux éléments de convoyage (26, 27, 28, 29) qui s'étendent dans une direction depuis la tête de convoyage et qui sont disposés à distance les uns des autres sur la tête de convoyage (23) et forment chacun une glissière (30) pour les poids d'équilibrage,
des dispositifs d'entraînement (34, 35) associés aux éléments de convoyage (26, 27, 28, 29) avec lesquels les poids d'équilibrage peuvent être déplacés le long des éléments de convoyage (26, 27, 28, 29),
les éléments de convoyage (26, 27, 28, 29) ayant chacun une extrémité d'introduction (31) pouvant être raccordée à l'unité de préparation (15) et une extrémité d'évacuation (32) pouvant être raccordée aux logements (6, 7) du dispositif de fixation (2) et qui peuvent être raccordés par déplacement de la tête de convoyage (23) soit par l'extrémité d'introduction (31) à l'unité de préparation (15) soit par l'extrémité d'évacuation (32) à un logement (6, 7) de l'unité de fixation (2), dans au moins une position de la tête de convoyage (23) un premier des éléments de convoyage (26, 27, 28, 29) pouvant être raccordé par l'extrémité d'évacuation (32) au premier logement (6) du dispositif de fixation (2) et un deuxième des éléments de convoyage (26, 27, 28, 29) pouvant être raccordé par l'extrémité d'évacuation (32) au deuxième logement (7) du dispositif de fixation (2).

2. Dispositif selon la revendication 1, **caractérisé en ce que** la tête de convoyage (23) peut pivoter autour d'un axe de rotation et les éléments de convoyage (26, 27, 28, 29) peuvent être raccordés soit par l'extrémité d'introduction (31) à l'unité de préparation (15) soit par l'extrémité d'évacuation (32) à un logement du dispositif de fixation (2), dans au moins une position angulaire de la tête de convoyage (23) un premier des éléments de convoyage (26, 27, 28, 29) pouvant être raccordé par l'extrémité d'évacuation (32) au premier logement (6) et un deuxième des éléments de convoyage (26, 27, 28, 29) pouvant être raccordé par l'extrémité d'évacuation (32) au deuxième logement (7).

3. Dispositif selon la revendication 2, **caractérisé en ce que** la tête de convoyage pivotante (23) présente trois éléments de convoyage (26, 27, 28) qui sont espacés les uns des autres d'une distance angulaire de 120°, la tête de convoyage (23) pouvant être déplacée dans trois positions angulaires dans chacune desquelles un des éléments de convoyage (26, 27, 28) est raccordé par l'extrémité d'introduction (31) à l'unité de préparation (15) et les deux autres éléments de convoyage (26, 27, 28) sont raccordés par les extrémités d'évacuation (32) aux logements (6, 7) du dispositif de fixation (2).

4. Dispositif selon la revendication 2, **caractérisé en ce que** la tête de convoyage présente quatre éléments de convoyage (26, 27, 28, 29) qui sont espacés les uns des autres d'une distance angulaire de 90°, la tête de convoyage (23) pouvant être déplacée dans quatre positions angulaires dans chacune desquelles un des éléments de convoyage (26, 27, 28, 29) est raccordé par l'extrémité d'introduction (31) à l'unité de préparation et deux autres des éléments de convoyage (26, 27, 28, 29) sont raccordés par les extrémités d'évacuation (32) aux logements (6, 7) du dispositif de fixation (2).

5. Dispositif selon l'une des revendications précédentes, **caractérisé en ce que** le dispositif d'entraînement (34, 35) présente un poussoir (36, 37) pouvant se déplacer le long de l'un des éléments de convoyage (26, 27, 28, 29) et qui peut être déplacé au moyen d'un actionneur pneumatique, hydraulique ou électrique (40, 41).

6. Dispositif selon la revendication 5, **caractérisé en ce que** la glissière (30) pour les poids d'équilibrage de chaque élément de convoyage (26, 27, 28, 29) est cintrée autour d'un axe de cintrage incliné par rapport à l'axe de rotation de la tête de convoyage (23), et **en ce que** le poussoir (36, 37) du dispositif d'entraînement (34, 35) peut pivoter autour d'un axe de pivotement et son axe de pivotement correspond à l'axe de cintrage de la glissière (30) de ceux des éléments de convoyage (26, 27, 28, 29) qui sont raccordés par l'extrémité d'évacuation (32) à l'un des logements (6, 7) du dispositif de fixation (2).

7. Dispositif selon l'une des revendications précédentes, **caractérisé en ce que** les éléments de convoyage (26, 27, 28, 29) sont munis de moyens de retenue magnétiques à l'aide desquels les poids d'équilibrage sont retenus tout en pouvant être déplacés dans la glissière (30),

8. Dispositif selon l'une des revendications précédentes, **caractérisé en ce que** les glissières des éléments de convoyage (26, 27, 28, 29) sont munies d'ouvertures raccordées à une source d'air aspiré et au moyen desquelles une sous-pression peut être réalisée sur les glissières pour un maintien mobile des poids d'équilibrage.

9. Dispositif selon l'une des revendications précédentes, **caractérisé en ce que** les éléments de convoyage (26, 27, 28, 29) sont munis de nervures de guidage (33) limitant latéralement les glissières (30).

10. Dispositif selon l'une des revendications précédentes, **caractérisé en ce que** des moyens de positionnement coopérant avec les logements (6, 7) du dispositif de fixation (2) sont disposés sur les extrémités d'évacuation (32) des éléments de convoyage (26, 27, 28, 29).

11. Dispositif selon l'une des revendications précédentes, **caractérisé en ce que** le dispositif de fixation (2) est muni d'une tête de fixation (1) pouvant tourner autour d'un axe et sur laquelle sont disposés les logements (6, 7) pour les poids d'équilibrage.

12. Dispositif selon la revendication 11, **caractérisé e**n ce que les logements (6, 7) sont disposés sur la tête de fixation (1) dans des plans différents disposés à distance l'un de l'autre et perpendiculaires à l'axe.

13. Dispositif selon l'une des revendications 11 ou 12, **caractérisé en ce que** la tête de fixation (1) est disposée sur le bras articulé (3) d'un robot et peut être déplacée vers le corps à équilibrer par un mouvement contrôlé du bras articulé (3).

14. Dispositif selon la revendication 13, **caractérisé en ce que** la tête de fixation (1) est disposée sur le bras articulé (3) du robot au moyen d'un accouplement à changement rapide (4).

15. Dispositif selon l'une des revendications 11 à 14, **caractérisé en ce que** la tête de fixation (1) est logée dans un guidage de chariot (12) et peut être déplacée dans le guidage de chariot (12) depuis une position centrale perpendiculairement à l'axe de rotation à l'encontre de la force de ressorts de centrage.
